# EUROPEAN PATENT APPLICATION

(11) **EP 4 748 583 A1**
(43) Date of publication of application: **27.05.2026**
(21) Application number: 25213999.3
(22) Date of filing: 06.11.2025
(51) Int. Cl.: B41M 5/00, B41M 7/00, C09D 11/38, C09D 11/54, B41J 11/00, B41J 2/21, C09D 11/40

(54) **INKJET RECORDING APPARATUS**

(30) Priority: 21.11.2024 JP 2024203047
(71) Applicant: KYOCERA Document Solutions Inc., Osaka-shi, Osaka 540-8585 (JP)
(72) Inventor: KIDA, Yukari, Osaka-shi, Osaka, 540-8585 (JP)
(74) Representative: Viering, Jentschura & Partner mbB Patent- und Rechtsanwälte

(57) **Abstract**

An inkjet recording apparatus (1) forms an image with a first ink and a second ink. A first minimum film-forming temperature of a first binder contained in the first ink is equal to or more than a second minimum film-forming temperature of a second binder contained in the second ink. The inkjet recording apparatus (1) includes a first ejection head (3), a first drying section (4), a second ejection head (5), and a second drying section (6). The first ejection head (3) ejects the first ink onto a recording medium. The first drying section (4) dries the first ink ejected onto the recording medium by the first ejection head (3) at a first drying temperature that is equal to or more than the second minimum film-forming temperature and equal to or less than the first minimum film-forming temperature. The second ejection head ejects the second ink onto the first ink dried by the first drying section (4). The second drying section (6) dries the second ink ejected onto the first ink by the second ejection head (5) at a second drying temperature that is equal to or more than the first minimum film-forming temperature and equal to or less than 80°C.

## Description

### Field

The present disclosure relates to an inkjet recording apparatus.

### Background

In an inkjet recording apparatus that forms an image on a non-absorbent medium made of resin, a known technique enhances image adhesion to the non-absorbent medium by forming the image through layering of two types of inks (see, for example, Japanese Patent Application Laid-open No. 2018-015968, Japanese Patent Application Publication No. 2013-049786, and Japanese Patent Application Laid-open No. 2012-251049). In such inkjet recording apparatus, the two types of ink contain resin particles as a binder to enhance the image adhesion to the non-absorbent medium.

### Summary

To achieve the above objective, an inkjet recording apparatus according to an embodiment of the present disclosure is of a line type and forms an image on a recording medium using an ink set including a first ink and a second ink.

The first ink and the second ink each contains a binder having a minimum film-forming temperature of equal to or more than 40°C and equal to or less than 80°C, a water-soluble organic solvent, a surfactant, and water.

A first minimum film-forming temperature of a first binder contained in the first ink is equal to or more than a second minimum film-forming temperature of the second binder contained in the second ink.

The inkjet recording apparatus includes a first ejection head, a first drying section, a second ejection head, a second drying section, and a control section.

The first ejection head ejects the first ink onto the recording medium.

The first drying section dries the first ink ejected onto the recording medium by the first ejection head at a first drying temperature that is equal to or more than the second minimum film-forming temperature and equal to or less than the first minimum film-forming temperature.

The second ejection head ejects the second ink onto the first ink dried by the first drying section.

The second drying section dries the second ink ejected by the second ejection head onto the first ink at a second drying temperature that is equal to or more than the first minimum film-forming temperature and equal to or less than 80°C.

The control section controls the first ejection head, the first drying section, the second ejection head, and the second drying section.

The first ink may be a clear ink or a white ink.

A difference between the first minimum film-forming temperature and the second minimum film-forming temperature may be equal to or more than 10°C.

The recording medium may be a non-absorbent medium made of resin.

In this case, the inkjet recording apparatus may further include a surface treatment section that performs a surface treatment on the recording medium before the first ejection head ejects the first ink.

These and other objects, features and advantages of the present disclosure will become more apparent in light of the following detailed description of best mode embodiments thereof, as illustrated in the accompanying drawings.

### Brief Description of Figures

Fig. 1 is a block diagram showing a schematic configuration of an inkjet recording apparatus according to an embodiment of the present disclosure;
Fig. 2 is a diagram showing an evaluation criterion for character blurring; and
Fig. 3 is a diagram showing an evaluation criterion for character blurring.

### Detailed Description

Hereinafter, an embodiment of the present disclosure will be described with reference to the drawings.

In ink containing a binder, if the binder forms a film too early after the ink lands on a non-absorbent medium, the film of the binder acts as a lid, sealing the surface and hindering internal drying. If the internal drying of the first ink, which lands on the non-absorbent medium first, is insufficient, pinning properties of the second ink landed on the first ink is impaired, making the image formed on the non-absorbent medium prone to blurring. On the other hand, if film formation of the binder in the first ink and the second ink is insufficient, it becomes difficult to achieve good scratch resistance in the image formed on the non-absorbent medium.

In view of the above circumstances, an object of the present disclosure is to provide an inkjet recording apparatus capable of forming an image with no blurring and high scratch resistance.

Embodiments of the present disclosure will now be described.

### [Ink Set]

### (General description)

An ink set according to an embodiment of the present disclosure includes a first ink and a second ink. A recording medium to be imaged using the ink set according to this embodiment is primarily a non-absorbent medium made of resin having a low-polarity recording surface with low ink permeability and poor ink adhesion. Examples of the resin configuring such non-absorbent medium include, for example, polyester, polypropylene, polyethylene, polystyrene, and polyvinyl chloride. The recording surface of the non-absorbent medium may be surface-treated, for example, by corona treatment, UV treatment, plasma treatment, or a primer. The following description pertains to examples using the non-absorbent medium as the recording medium. However, the recording medium to be imaged using the ink set according to this embodiment may also be an absorbent medium possessing ink permeability.

The ink set according to this embodiment is configured to be capable of forming a highly scratch-resistant image and is particularly useful for surface printing on the non-absorbent medium. Therefore, in the ink set according to this embodiment, the first ink is typically a clear ink or a white ink, and the second ink is a color ink. However, the ink set according to this embodiment is not limited in its applications and may also be used for back printing on a transparent non-absorbent medium. When used for the back printing, the first ink may be a color ink and the second ink may be a white ink.

### (First ink)

The first ink according to this embodiment contains the first binder, a water-soluble organic solvent, a surfactant, and water. The first ink according to this embodiment is applied to the recording surface of the non-absorbent medium and dried to form a first ink layer on the non-absorbent medium.

The first ink according to this embodiment includes the first binder to improve adhesion to the non-absorbent medium in the image formed by the ink set. The first binder is configured of resin particles. A first minimum film-forming temperature of the first binder is equal to or more than 40°C and equal to or less than 80°C. In the first ink according to this embodiment, it is preferable that a content of the first binder is equal to or more than 3 mass% and equal to or less than 20 mass%.

The water-soluble organic solvent included in the first ink according to this embodiment is not particularly limited as long as it is compatible with other components. In the first ink according to this embodiment, drying properties can be adjusted by the water-soluble organic solvent. Examples of the water-soluble organic solvent usable in the first ink according to this embodiment include propylene glycol monomethyl ether, propylene glycol monopropyl ether, dipropylene glycol monomethyl ether, dipropylene glycol monopropyl ether, triethylene glycol monobutyl ether, 1,2-propanediol, 3-methyl-1,3-butanediol, 1,2-pentanediol, 2-methyl-1,3-propanediol, 1,3-propanediol, dipropylene glycol, butyltriglycol, 1,5-pentanediol, and 3-methyl-1,5-pentanediol. In the first ink according to this embodiment, a content of the water-soluble organic solvent is preferably equal to or more than 1.0 mass% and equal to or less than 35 mass%.

A type and a composition of the surfactant are not limited to those described below or in Examples. However, a silicone-based surfactant is preferred as the surfactant to be included in the first ink according to this embodiment. The silicone-based surfactant is a surfactant having a siloxane bond within its molecule. In the first ink according to this embodiment, including the silicone-based surfactant improves wetting and spreading properties on the recording surface of the non-absorbent medium. Examples of a commercially available silicone-based surfactant include, for example, Silface (registered trademark) SAG002 and Silface SAG503A manufactured by Nisshin Chemical Industry Co., Ltd. In the first ink according to this embodiment, it is preferable that a content of the surfactant is equal to or more than 0.05 mass% and equal to or less than 0.5 mass%.

When the first ink according to this embodiment is the white ink, it contains a white pigment. As the white pigment, for example, fine particles of titanium oxide can be used. This enables the first ink according to this embodiment to form a high-quality white image with high whiteness and opacity. A primary particle size of the fine particles of titanium oxide used as the white pigment is preferably equal to or more than 100 nm and equal to or less than 500 nm, and more preferably equal to or more than 150 nm and equal to or less than 400 nm. Furthermore, the fine particles of titanium oxide used as the white pigment may be surface-treated, for example, with silica or alumina. In the first ink according to this embodiment, it is preferable that a content of the white pigment is equal to or more than 3.0 mass% and equal to or less than 15.0 mass%.

In the first ink according to this embodiment, water such as ion-exchanged water, purified water, distilled water or the like may be used. In the first ink according to this embodiment, from the perspective of the drying properties and ejection reliability, it is preferable that a content of the water is equal to or more than 40 mass% and equal to or less than 80 mass%.

### (Second ink)

The second ink according to this embodiment contains a second binder, a water-soluble organic solvent, a surfactant, and water. The second ink according to this embodiment is applied to the first ink layer formed on the recording surface of the non-absorbent medium and dried to form a second ink layer on the first ink layer.

The second ink according to this embodiment contains the second binder to improve the adhesion to the non-absorbent medium in the image formed by the ink set. The second binder is configured of the resin particles. A second minimum film-forming temperature of the second binder is equal to or more than 40°C and equal to or less than 80°C. In the second ink according to this embodiment, it is preferable that a content of the second binder is equal to or more than 3 mass% and equal to or less than 20 mass%.

The water-soluble organic solvent included in the second ink according to this embodiment is not particularly limited as long as it is compatible with the other components. In the second ink according to this embodiment, the drying properties can be adjusted by the water-soluble organic solvent. Examples of the water-soluble organic solvent usable in the second ink according to this embodiment include propylene glycol monomethyl ether, propylene glycol monopropyl ether, dipropylene glycol monomethyl ether, dipropylene glycol monopropyl ether, triethylene glycol monobutyl ether, 1,2-propanediol, 3-methyl-1,3-butanediol, 1,2-pentanediol, 2-methyl-1,3-propanediol, 1,3-propanediol, dipropylene glycol, butyltriglycol, 1,5-pentanediol, and 3-methyl-1,5-pentanediol. In the second ink according to this embodiment, a content of the water-soluble organic solvent is preferably equal to or more than 1.0 mass% and equal to or less than 35 mass%.

A silicone-based surfactant is preferred as the surfactant to be included in the second ink according to this embodiment. The silicone-based surfactant is a surfactant having a siloxane bond within its molecule. In the second ink according to this embodiment, including the silicone-based surfactant improves the wetting and spreading properties on the first ink layer. Examples of a commercially available silicone-based surfactant include, for example, Silface (registered trademark) SAG002 and Silface SAG503A manufactured by Nisshin Chemical Industry Co., Ltd. In the second ink according to this embodiment, a content of the surfactant is preferably equal to or more than 0.05 mass% and equal to or less than 0.5 mass%.

The second ink according to this embodiment contains a pigment as a colorant, from the perspective of improvement of color mixing prevention and water resistance in the image formed on the non-absorbent medium. The pigment may be either an inorganic pigment or an organic pigment. If necessary, the pigment may also be used in combination with an extender pigment.

Specific examples of the inorganic pigment usable in the second ink according to this embodiment include carbon black and a metal oxide. Carbon black is particularly preferred for black ink. Examples of the carbon black include furnace black, thermal lamp black, acetylene black, and channel black.

Specific examples of the organic pigment usable in the second ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalon pigment.

The second ink according to this embodiment is not particularly limited in hue, and any of a colored pigment such as yellow, magenta, cyan, blue, red, orange, and green can be used. Specific examples of a preferred colored pigment include C.I. Pigment Yellow, C.I. Pigment Red, C.I. Pigment Orange, C.I. Pigment Violet, C.I. Pigment Blue, and C.I. Pigment Green. The second ink according to this embodiment may use one or more types of these colored pigments selected as the pigment.

In the second ink according to this embodiment, water such as ion-exchanged water, purified water, distilled water or the like can be used. In the second ink according to this embodiment, from the perspective of the drying properties and the ejection reliability, it is preferable that a content of the water is equal to or more than 40 mass% and equal to or less than 80 mass%.

### (Relationship between first minimum film-forming temperature and second minimum film-forming temperature)

In the ink set according to this embodiment, the first minimum film-forming temperature of the first binder contained in the first ink is equal to or more than the second minimum film-forming temperature of the second binder contained in the second ink. This facilitates obtaining high pinning properties of the second ink on the dried first ink. Furthermore, in the ink set according to this embodiment, it is preferable that a difference between the first minimum film-forming temperature of the first binder contained in the first ink and the second minimum film-forming temperature of the second binder contained in the second ink is equal to or more than 10°C. This further facilitates obtaining the high pinning properties of the second ink on the dried first ink.

### (Other components)

The ink (at least one of the first ink and the second ink) according to this embodiment may optionally contain components other than those described above. For example, the ink according to this embodiment may use a pigment dispersion resin that enhances dispersibility of the pigment in the solvent. The pigment dispersion resin forms a pigment dispersion together with the pigment by adsorbing onto a pigment surface within the pigment dispersion liquid. Examples of the pigment dispersion resin include a copolymer of at least one monomer selected from an alkyl (meth)acrylic ester, styrene, and vinyl naphthalene, and at least one monomer selected from a (meth)acrylic acid and a maleic acid.

As the pigment dispersion resin, a resin having a repeating unit derived from a (meth)acrylic acid ((meth)acrylic acid unit), a repeating unit derived from a (meth)acrylic acid alkyl ester ((meth)acrylic acid alkyl ester unit), and a styrene unit are preferred. In this case, a percentage of the (meth)acrylic acid unit among all repeating units in the pigment dispersion resin is preferably equal to or more than 4.5 mass% and equal to or less than 8.0 mass%. A percentage of the (meth)acrylic acid alkyl ester unit among all repeating units in the pigment dispersion resin is preferably equal to or more than 35 mass% and equal to or less than 70 mass%. A percentage of the styrene unit among all repeating units in the pigment dispersion resin is preferably equal to or more than 27.0 mass% and equal to or less than 60.0 mass%. As the pigment dispersion resin, a resin having a repeating unit derived from a methacrylic acid, a repeating unit derived from a methyl methacrylate, a repeating unit derived from a butyl acrylate, and a styrene unit is more preferred.

In the ink according to this embodiment, a content of the pigment dispersion resin is preferably equal to or more than 0.5 mass% and equal to or less than 8.0 mass%, and more preferably equal to or more than 1.5 mass% and equal to or less than 4.0 mass%. In the ink according to this embodiment, setting the content of the pigment dispersion resin to equal to or more than 0.5 mass% allows more effective suppression of pigment agglomeration. In the ink according to this embodiment, setting the content of the pigment dispersion resin to equal to or less than 8.0 mass% allows to suppress an occurrence of poor ejection.

In the pigment dispersion liquid in which the pigment dispersion configured of the pigment and the pigment dispersion resin is dispersed prior to preparation as an ink, it is preferable to use water as a dispersion medium. The pigment dispersion liquid preferably further contains a low molecular weight surfactant to improve the dispersibility of the pigment dispersion. A D50 of the pigment dispersion configured of the pigment and the pigment dispersion resin is preferably equal to or more than 50 nm and equal to or less than 200 nm, and more preferably equal to or more than 70 nm and equal to or less than 130 nm. The D50 of the pigment dispersion can be measured, for example, using a dynamic light scattering particle size distribution analyzer (for example, manufactured by Malvern Instruments "Zetasizer Nano ZS") with a sample solution prepared by diluting the pigment dispersion liquid 300-fold with ion-exchanged water. In the pigment dispersion liquid, the content of the pigment is preferably equal to or more than 5.0 mass% and equal to or less than 25.0 mass%, and more preferably equal to or more than 10.0 mass% and equal to or less than 20.0 mass%. In the pigment dispersion liquid, the content of the pigment dispersion resin is preferably equal to or more than 2.0 mass% and equal to or less than 10.0 mass%, and more preferably equal to or more than 4.0 mass% and equal to or less than 8.0 mass%. In the pigment dispersion liquid, a content of the low molecular weight surfactant is preferably equal to or more than 0.1 mass% and equal to or less than 2.0 mass%, and more preferably equal to or more than 0.3 mass% and equal to or less than 1.0 mass%.

In addition, the ink according to this embodiment may contain various additives such as a solubility stabilizer, an antioxidant, a viscosity modifier, a pH adjuster, and a neutralizing agent, in addition to the pigment dispersion resin, as necessary.

### [Inkjet recording apparatus]

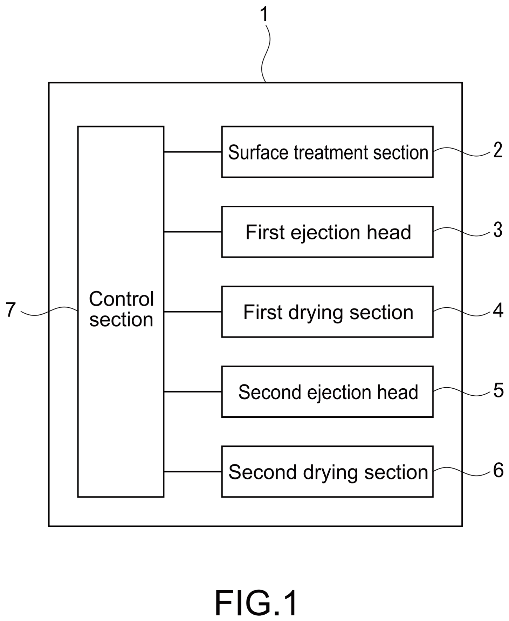

An inkjet recording apparatus 1 according to this embodiment is configured to form the image on the non-absorbent medium using the ink set according to this embodiment described above. Fig. 1 is a block diagram showing a general configuration of the inkjet recording apparatus 1. The inkjet recording apparatus 1 includes a surface treatment section 2, a first ejection head 3, a first drying section 4, a second ejection head 5, a second drying section 6, and a control section 7.

The inkjet recording apparatus 1 is of a line type, with the first ejection head 3 and the second ejection head 5 configured as line heads. In the inkjet recording apparatus 1 according to this embodiment, it is preferable that the surface treatment section 2, the first ejection head 3, the first drying section 4, the second ejection head 5, and the second drying section 6 are arranged in that order from an upstream to a downstream in a transport direction of the non-absorbent medium.

The surface treatment section 2 performs a surface treatment such as a corona treatment or a UV treatment on the recording surface of the non-absorbent medium. This improves surface energy and polarity of the recording surface of the non-absorbent medium, resulting in more uniform ink wetting and spreading and enhanced image adhesion.

The first ejection head 3 ejects the first ink onto the recording surface of the non-absorbent medium. The first drying section 4 dries the first ink ejected onto the recording surface of the non-absorbent medium by the first ejection head 3 at a first drying temperature that is equal to or more than the second minimum film-forming temperature and equal to or less than the first minimum film-forming temperature. Setting the first drying temperature of the first drying section 4 to be equal to or less than the first minimum film-forming temperature of the first ink delays film formation of the first ink, allowing the first ink to dry sufficiently internally. This improves the pinning properties of the second ink on the first ink after drying. Furthermore, setting the first drying temperature of the first drying section 4 to be equal to or more than the second minimum film-forming temperature of the second ink provides a preheating effect on the surface of the first ink where the second ink lands. This further improves the pinning properties of the second ink on the dried first ink.

The second ejection head 5 ejects the second ink onto the first ink dried by the first drying section 4. The second drying section 6 dries the second ink ejected onto the first ink by the second ejection head 5 at a second drying temperature equal to or more than the first minimum film-forming temperature and equal to or less than 80°C. By setting the second drying temperature of the second drying section 6 to be equal to or more than the second minimum film-forming temperature of the second ink, the first binder and the second binder in the first ink and the second ink can be sufficiently film-formed. This results in high scratch resistance in the image formed on the non-absorbent medium. Furthermore, setting the second drying temperature of the second drying section 6 to equal to or less than 80°C prevents damage to a quality of non-absorbent medium formed from a heat-sensitive resin.

The control section 7 controls operations of the surface treatment section 2, the first ejection head 3, the first drying section 4, the second ejection head 5, and the second drying section 6, as well as the first drying temperature of the first drying section 4 and the second drying temperature of the second drying section 6.

The inkjet recording apparatus 1 is not limited to the above configuration and may be modified as necessary. For example, the inkjet recording apparatus 1 may not include the surface treatment section 2 when it is not necessary to apply the surface treatment to the recording surface of the non-absorbent medium, such as when using the non-absorbent medium with a pre-applied surface treatment on the recording surface.

### [Examples and Comparative Examples]

In Examples and Comparative Examples of the present disclosure, the ink set was prepared and the inkjet recording apparatus was evaluated. The following examples merely illustrate the present disclosure and do not limit the scope of the disclosure.

### (Description of ink components)

For both the first ink and the second ink used in the ink set according to Examples and Comparative Examples, 1,3-propanediol and butyltriglycol were used as the water-soluble organic solvent, and a silicone-based surfactant, i.e., Silface (registered trademark) SAG503A (manufactured by Nissin Chemical Industry Co., Ltd.) was used as the surfactant. Furthermore, for both the first ink and the second ink, one of the following commercially available products was used as the binder:
Superflex 820 (manufactured by Daiichi Kogyo Seiyakusha Co., Ltd., minimum film-forming temperature: 40°C) Superflex 130 (manufactured by Daiichi Kogyo Seiyakusha Co., Ltd., minimum film-forming temperature: 55°C) Superflex 420NS (manufactured by Daiichi Kogyo Seiyakusha Co., Ltd., minimum film-forming temperature: 65°C) Superflex 870 (manufactured by Daiichi Kogyo Seiyakusha Co., Ltd., minimum film-forming temperature: 70°C) UC-6600 (Saiden Chemical Co., Ltd., minimum film-forming temperature: 85°C)
Sepoljon NE205 (Sumitomo Seika Chemicals Co., Ltd., minimum film-forming temperature: 140°C)

### (Preparation of first ink)

First, the pigment dispersion liquid in which a white pigment was dispersed in water was prepared. 75g of a pigment dispersion resin (manufactured by Bigchemie Japan Co., Ltd., product name: DISPERBYK-190, non-volatile content: 40 mass%, dispersion medium: water) was diluted with 775g of ion-exchanged water. Then, 150g of a white pigment (JR-804, manufactured by Teika Co., Ltd.) was added. A premix was performed using a Homodisper at a rotation speed of 5000 rpm for 1 hour. Subsequently, dispersion processing was performed using a bead mill (manufactured by Nippon Coke & Engineering Co., Ltd.), yielding a white pigment dispersion. Zirconia beads (0.2 mm diameter) were filled into a vessel at 80% filling rate relative to a volume. The pigment and the pigment dispersion resin contained in the pigment dispersion liquid constitute components of the pigment dispersion in each ink. The water contained in the pigment dispersion liquid constitutes a water component in each ink.

Next, the ink was prepared using the above-described pigment dispersion liquid. The pigment dispersion, the first binder, the water-soluble organic solvent, the surfactant, and water were weighed and placed into a beaker. The contents of the beaker were stirred using a stirrer ("Three One Motor BL-600" manufactured by Shinto Kagaku Co., Ltd.) at a rotational speed of 400 rpm to uniformly mix the contents and obtain the ink. The ink was filtered using a filter (pore size 5 µm) to remove impurities and coarse particles contained in the mixture. Thus, the white ink was obtained. Note that the clear ink was prepared without using the pigment dispersion liquid. Table 1 shows types and contents (mass%) of components of first inks p1 to p7 used in the ink sets in Examples and Comparative Examples. The first inks p1 to p6 are the white inks, and the first ink p7 is the clear ink.

**[Table 1]**

| | | First ink | | | | | | |
|---|---|---|---|---|---|---|---|---|
| | | p1 | p2 | p3 | p4 | p5 | p6 | p7 |
| Pigment dispersion | | 13 | 13 | 13 | 13 | 13 | 13 | |
| Binder | Superflex 820 | 5 | | | | | | |
| | Superflex 130 | | 5 | | | | | |
| | Superflex 420NS | | | 5 | | | | 18 |
| | Superflex 870 | | | | 5 | | | |
| | UC-6600 | | | | | 5 | | |
| | Seporjon NE205 | | | | | | 5 | |
| Aqueous organic solvent | 1,3-propanediol | 25 | 25 | 25 | 25 | 25 | 25 | 20 |
| | Butyltriglycol | 8 | 8 | 8 | 8 | 8 | 8 | 8 |
| Surfactant | Silface SAG503A | 0.5 | 0.5 | 0.5 | 0.5 | 0.5 | 0.5 | 0.5 |
| Water | | 48.5 | 48.5 | 48.5 | 48.5 | 48.5 | 48.5 | 53.5 |

### (Preparation of second ink)

First, the pigment dispersion liquid in which a color pigment was dispersed in water was prepared. 75g of the pigment dispersion resin (manufactured by Bigchemie Japan Co., Ltd., product name: DISPERBYK-190, non-volatile content: 40 mass%, dispersion medium: water) was diluted with 775 g of ion-exchanged water. 150 g of Pigment Blue 15:03 or Pigment Yellow 155 was then added. A premix was performed using a Homodisper at a rotational speed of 5000 rpm for 1 hour. Subsequently, dispersion processing was performed using the bead mill (manufactured by Nippon Coke & Engineering Co., Ltd.), yielding a cyan and yellow pigment dispersion. Zirconia beads (0.2 mm diameter) were filled into the vessel at 80% filling rate relative to a volume. The pigment and the pigment dispersion resin contained in the pigment dispersion liquid constitute components of the pigment dispersion in each ink. The water contained in the pigment dispersion liquid constitutes a water component in each ink.

Next, the ink was prepared using the above-described pigment dispersion liquid. The pigment dispersion, the second binder, the water-soluble organic solvent, the surfactant, and water were weighed and placed into a beaker. The contents of the beaker were stirred using the stirrer ("Three One Motor BL-600" manufactured by Shinto Kagaku Co., Ltd.) at a rotational speed of 400 rpm to uniformly mix the contents and obtain the ink. The ink was filtered using a filter (pore size 5 µm) to remove impurities and coarse particles contained in the mixture. Thus, the cyan and yellow ink was obtained. Table 2 shows types and contents (mass%) of components of second inks q1 to q6 used in the ink sets in Examples and Comparative Examples.

**[Table 2]**

| | | Second ink | | | | |
|---|---|---|---|---|---|---|
| | | q1 | q2 | q3 | q4 | q5 q6 |
| Pigment dispersion | | 5 | 5 | 5 | 5 | 5 |
| Binder | Superflex 820 | 13 | | | | |
| | Superflex 130 | | 13 | | | |
| | Superflex 420NS | | | 13 | | |
| | Superflex 870 | | | | 13 | |
| | UC-6600 | | | | | 13 |
| | Seporjon NE205 | | | | | 13 |
| Aqueous organic solvent | 1,3-propanediol | 25 | 25 | 25 | 25 | 25 |
| | Butyltriglycol | 8 | 8 | 8 | 8 | 8 |
| Surfactant | Silface SAG503A | 0.5 | 0.5 | 0.5 | 0.5 | 0.5 |
| Water | | 48.5 | 48.5 | 48.5 | 48.5 | 48.5 |

### (Evaluation of inkjet recording apparatus)

The inkjet recording apparatus using each of various ink sets including combinations of the first inks p1 to p7 and the second inks q1 to q6 was evaluated for ink bleeding, character blurring, scratch resistance, and a medium quality.

### Ink bleeding evaluation method

Each ink set was loaded into a single-pass printing evaluation apparatus equipped with an inkjet head (piezoelectric type, 1200 dpi). Printing conditions for each ink were: 2 pl of an amount of ejection liquid droplets, and 1200 dpi of a printing head resolution. As the recording medium, the non-absorbent medium (OPP (biaxially oriented polypropylene) film "Trefan" (manufactured by Toray Industries, Inc.)) was used. The first drying section and the second drying section were configured using dryers. An airflow velocity in the first drying section and the second drying section was set to equal to or more than 0.5 m/s and equal to or less than 1 m/s.

For each of Examples and Comparative Examples, a strip-like solid image was formed on the recording surface of the non-absorbent medium by performing operations in the following order: ejection of the first ink, drying of the first ink, ejection of the second ink (cyan and yellow), and drying of the second ink. Additionally, for each of Examples and Comparative Examples, the strip-like solid image was formed in a similar manner as a reference on a PET film "GT703" (manufactured by Toyobo Co., Ltd.), which is specially processed to prevent bleeding as the recording medium. For each of Examples and Comparative Examples, an evaluation value for the ink bleeding was defined as a percentage increase in a width of the strip-like solid image relative to the reference. Each ink bleed evaluation value was assessed using the following criteria A to C. For the ink bleeding, the solid image rated A was considered pass, while the solid image rated B or C was considered fail.
A: Less than 3%
B: Equal to or more than 3% and less than 5%
C: Equal to or more than 5%

### Character blurring evaluation method

Each ink set was loaded into the single-pass printing evaluation apparatus equipped with the inkjet head (piezoelectric type, 1200 dpi). The printing conditions for each ink were: 21V of a head applied voltage, 36 kHz of a drive frequency, 2 pl of the amount of the ejection liquid droplets, and 1200 dpi of the printing head resolution. As the recording medium, the non-absorbent medium (OPP (biaxially oriented polypropylene) film "Trefan" (manufactured by Toray Industries, Inc.)) was used. The first drying section and the second drying section were configured using dryers. The airflow velocity in the first drying section and the second drying section was set to equal to or more than 0.5 m/s and equal to or less than 1 m/s.

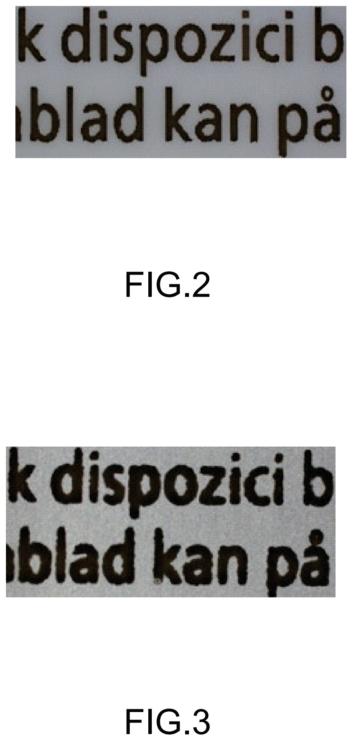

For each of Examples and Comparative Examples, a 3pt character string image was formed on the recording surface of the non-absorbent medium by performing operations in the following order: ejection of the first ink, drying of the first ink, ejection of the second ink (cyan), and drying of the second ink. Each character blurring was evaluated using the following criteria A and B. For the character blurring, the character string image rated as A was considered pass, while the character string image rated as B was considered fail.
A: No character blurring (see Fig. 2)
B: Character blurring present (see Fig. 3)

### Scratch resistance evaluation method

For each Examples and Comparative Examples, a 100% solid image was formed on the recording surface of the non-absorbent medium by performing operations in the following order: ejection of the first ink, drying of the first ink, ejection of the second ink (cyan), and drying of the second ink. The image was then held at 110°C for 20 minutes and left for one day. Subsequently, a dry friction test was performed on the solid image using the Gakushin test method. After 100 friction cycles, the solid image was visually inspected. The scratch resistance was evaluated based on the following criteria A and B. The solid image rated as A passed, while the solid image rated as B failed.
A: No exposure of non-absorbent medium due to solid image peeling
B: Exposure of non-absorbent medium due to solid image peeling

### Medium quality evaluation method

A state of the non-absorbent medium before and after the ink bleed evaluation described above was visually inspected. The medium quality was evaluated using the following criteria A and B. The non-absorbent medium rated as A passed, while the non-absorbent medium rated as B failed.
A: No change in non-absorbent medium
B: Warping occurred in non-absorbent medium after ink bleed evaluation

### (Examples 1 to 5)

In Examples 1 to 5, the ink set was configured of the first ink and the second ink in combination shown in Table 3. Table 3 shows the first minimum film-forming temperature (MFT1) of the first binder for each first ink and the second minimum film-forming temperature (MFT2) of the second binder for each second ink. Furthermore, in Examples 1 to 5, the first drying temperature and the second drying temperature were set as shown in Table 3. In Examples 1 to 5, the ink set, the first drying temperature, and the second drying temperatures were configured as described in the embodiment. Table 3 shows evaluation results for the ink bleeding, the character blurring, the scratch resistance, and the medium quality for Examples 1 to 5. In all Examples 1 to 5, the ink bleeding, the character blurring, the scratch resistance, and the medium quality all passed.

**[Table 3]**

| | | | Example | | | | |
|---|---|---|---|---|---|---|---|
| | | | 1 | 2 | 3 | 4 | 5 |
| Ink set | First ink | Type | p4 | p4 | p4 | p1 | p7 |
| | | MFT1 (°C) | 70 | 70 | 70 | 40 | 65 |
| | Second ink | Type | q2 | q3 | q4 | q1 | q3 |
| | | MFT2 (°C) | 55 | 65 | 70 | 40 | 65 |
| Drying temperature (°C) | First drying temperature | | 60 | 70 | 70 | 40 | 65 |
| | Second drying temperature | | 80 | 80 | 80 | 80 | 80 |
| Evaluation result | Ink bleed | | A | A | A | A | A |
| | Character blur | | A | A | A | A | A |
| | Scratch resistance | | A | A | A | A | A |
| | Media quality | | A | A | A | A | A |

### (Comparative Examples 1 to 9)

In Comparative Examples 1 to 9, the ink set was configured of the first ink and second ink in combination shown in Table 4. Table 4 shows the first minimum film-forming temperature (MFT1) of the first binder for each first ink and the second minimum film-forming temperature (MFT2) of the second binder for each second ink. Furthermore, in Comparative Examples 1 to 9, the first drying temperature and the second drying temperature were set as shown in Table 4. Comparative Examples 2 to 4 and 9 differ from the configuration of the above embodiment in that the first minimum film-forming temperature is less than the second minimum film-forming temperature. Comparative Examples 7 and 8 differ from the configuration of the above embodiment in that the first minimum film-forming temperature exceeds 80°C. Comparative Examples 1 and 6 differ from the configuration of the above embodiment in that the first drying temperature exceeds the first minimum film-forming temperature. Comparative Examples 4, 5, 8, and 9 differ from the configuration of the above embodiment in that the second drying temperature exceeds 80°C. Table 4 shows evaluation results for the ink bleeding, the character blurring, the scratch resistance, and the medium quality for Comparative Examples 1 to 9. In all Comparative Examples 1 to 9, at least one of the ink bleeding, the character blurring, the scratch resistance, and the medium quality failed.

**[Table 4]**

| | | | Comparative example | | | | | | | | |
|---|---|---|---|---|---|---|---|---|---|---|---|
| | | | 1 | 2 | 3 | 4 | 5 | 6 | 7 | 8 | 9 |
| Ink set | First ink | Type | p1 | p1 | p2 | p2 | p4 | p3 | p5 | p6 | p4 |
| | | MFT1 (°C) | 40 | 40 | 55 | 55 | 70 | 65 | 85 | 140 | 70 |
| | Second ink | Type | p1 | p4 | p6 | p6 | p4 | p2 | p4 | p4 | p5 |
| | | MFT2 (°C) | 40 | 70 | 140 | 140 | 70 | 55 | 70 | 70 | 85 |
| Drying temperature (°C) | First drying temperature | | 50 | 35 | 50 | 50 | 60 | 80 | 80 | 80 | 50 |
| | Second drying temperature | | 80 | 80 | 80 | 90 | 90 | 80 | 80 | 90 | 90 |
| | Ink bleed | | B | A | A | A | A | C | A | A | A |
| Evaluation result | Character blur | | B | B | A | A | A | B | A | A | A |
| | Scratch resistance | | A | A | B | B | A | A | B | B | A |
| | Media quality | | A | A | A | B | B | A | A | B | B |

It should be understood by those skilled in the art that various modifications, combinations, subcombinations and alterations may occur depending on design requirements and other factors insofar as they are within the scope of the appended claims or the equivalents thereof.

## Claims

1. An inkjet recording apparatus (1) of a line type that forms an image on a recording medium using an ink set including a first ink and a second ink, wherein
the first ink and the second ink each contains a binder having a minimum film-forming temperature of equal to or more than 40°C and equal to or less than 80°C, a water-soluble organic solvent, a surfactant, and water, and wherein
a first minimum film-forming temperature of a first binder contained in the first ink is equal to or more than a second minimum film-forming temperature of a second binder contained in the second ink,
the inkjet recording apparatus (1), comprising:
a first ejection head (3) that ejects the first ink onto the recording medium;
a first drying section (4) that dries the first ink ejected onto the recording medium by the first ejection head (3) at a first drying temperature that is equal to or more than the second minimum film-forming temperature and equal to or less than the first minimum film-forming temperature;
a second ejection head (5) that ejects the second ink onto the first ink dried by the first drying section (4);
a second drying section (6) that dries the second ink ejected onto the first ink by the second ejection head (5) at a second drying temperature that is equal to or more than the first minimum film-forming temperature and equal to or less than 80°C; and
a control section (7) that controls the first ejection head (3), the first drying section (4), the second ejection head (5), and the second drying section (6).

2. The inkjet recording apparatus (1) according to claim 1, wherein the first ink is a clear ink or a white ink.

3. The inkjet recording apparatus (1) according to claim 1 or 2, wherein a difference between the first minimum film-forming temperature and the second minimum film-forming temperature is equal to or more than 10°C.

4. The inkjet recording apparatus (1) according to claim 1 or 2, wherein the recording medium is a non-absorbent medium made of resin, and further comprising a surface treatment section that performs a surface treatment on the recording medium before the first ejection head (3) ejects the first ink.
